Europäisches Patentamt

**European Patent Office**

Office européen des brevets

(19)

(11) Veröffentlichungsnummer: **0 137 059**

**A1**

(12) # EUROPÄISCHE PATENTANMELDUNG

(21) Anmeldenummer: 83110029.2

(22) Anmeldetag: 07.10.83

(51) Int. Cl.⁴: **C 03 B 3/00**
**C 03 B 5/235**

(43) Veröffentlichungstag der Anmeldung:
17.04.85 Patentblatt 85/16

(84) Benannte Vertragsstaaten:
AT BE CH DE FR GB IT LI NL SE

(71) Anmelder: Sorg GmbH & Co. KG
Im Aller 23 Postfach 520
D-8770 Lohr/Main(DE)

(72) Erfinder: Pieper, Helmut
Buchenstrasse 19
D-8770 Lohr/Main(DE)

(74) Vertreter: Patentanwälte Schulze Horn und Hoffmeister
Goldstrasse 36
D-4400 Münster(DE)

(54) Verfahren zum Schmelzen von Glas mit Gemengevorwärmung sowie Glasschmelzofen zur Durchführung dieses Verfahrens.

(57) Verfahren zum Schmelzen von Glas mit einer Vorwärmung des auf das Glasbad aufzugebenden Gemenges, sowie einer Energiezuführung in den Ofen mittels Gas- oder Ölbrenner, denen durch das Abgas vorgewärmte Verbrennungsluft zugeführt wird, wobei das Teil des Abgasstromes zur End-Vorerwärmung der zugeführten Verbrennungsluft und der andere Teil zur Gemengevorwärmung dient und die Abgasströme dann weider zusammengeführt werden und die anfängliche Vorwärmung der Verbrennungsluft gemeinsam vornehmen sowie Glasschmelzofen zur Durchführung des Verfahrens mit einer Einrichtung zur Gemengevorwärmung und einer Einrichtung zur Vorwärmung der Verbrennungsluft.

EP 0 137 059 A1

./...

**Fig. 1**

SCHEMA DER LUFT UND ABGASFUHRUNG

## Verfahren zum Schmelzen von Glas mit Gemengevorwärmung sowie Glasschmelzofen zur Durchführung dieses Verfahrens

Die Erfindung betrifft ein Verfahren zum Schmelzen von Glas mit einer Vorwärmung des auf das Glasbad aufzugebenden Gemenges, sowie einer Energiezuführung in den Ofen mittels Gas- oder Ölbrennern, denen durch das Abgas vorgewärmte Verbrennungsluft zugeführt wird sowie einen Glasschmelzofen zur Durchführung dieses Verfahrens mit einer Einrichtung zur Gemengevorwärmung und einer zur Vorwärmung der Verbrennungsluft.

Die Wärmerückgewinnung bei Glaswannen wird zur Zeit über Regeneratoren und Rekuperatoren durchgeführt. In beiden Fällen wird der Wärmeinhalt der Rauchgase lediglich dazu benutzt, die Verbrennungsluft vorzuwärmen. Die mögliche Wärmeaufnahme der Luft liegt jedoch erheblich unter dem Wärmeinhalt der Rauchgase, da die Menge der Rauchgase größer als die Luftmenge ist und die spezifische Wärme von Rauchgasen erheblich höher liegt als die der Luft.

Bei Regenerativsystemen ist es theoretisch möglich, bei sehr großen Kammervolumina, die jedoch unwirtschaftlich sind, die Lufttemperatur annähernd auf die Größe der Abgastemperatur im Kammereintritt zu bringen. Selbst dann ergibt sich aber theoretisch eine Abgastemperatur, die noch weit über 400° C liegt.

Bei Rekuperativ-Systemen ist die Luftvorwärmung auf wesentlich niedrigere Temperaturen, nämlich max. 800° bei Stahl-Rekuperatoren beschränkt, weil das verwendete Material höhere Temperaturen auf der Luftseite nicht zuläßt. In diesem Fall sind die Abgastemperaturen erheblich höher und liegen zwischen 800 und 900° C. In beiden Fällen wird bisher die Restabgaswärme im Normalfall nicht genutzt und wird mit den Rauchgasen emittiert.

Es gibt daher eine Reihe von Vorschlägen, für die Gemengevorwärmung die Restenergie des Rauchgases zu benutzen, um eine weitere Verbesserung des Wirkungsgrades der Glasschmelzanlage zu erreichen. Das kritische bei der Gemengevorwärmung ist jedoch, daß das Gemenge, sobald es auf 200° vorgewärmt ist, zusammenbackt und sich kaum noch fördern läßt. Dazu kommt, daß Gemenge ein guter Isolator ist, so daß enorme Heizflächen gebraucht werden, um eine merkbare Temperaturerhöhung im Gemenge zu erreichen.

Ein Aufheizen des Gemenges, wie in einer Trommel üblich, wobei der Gasstrom durch das rieselnde Gut geführt wird, verbietet sich, weil dabei die leichteren und feineren Bestandteile des Gemenges ausgetragen würden und es zwangsläufig zu Inhomogenitäten im Gemenge kommen würde. Um einen höheren Gemengevorwärmgrad zu erreichen, müßte auch di Temperaturdifferenz zwischen Vorwärmgut und Energieträger erheblich höher liegen als dies bei den normalen Abgastemperaturen der Fall ist. Bei höheren Abgastemperaturen ergibt es sich aber zwangsläufig, daß einige Teile des Wärmegutes die Temperatur des Wärmeträgers annehmen. Das bedeutet im Falle von Glas, daß Gemengereaktionen eintreten und ab etwa 800 bis 900° eine schmelzflüssige Phase vorliegt, die auf keinen Fall in Kontakt mit einem Fördermittel kommen darf, weil dies sonst zwangsläufig Verstopfungen durch Ankleben der vorgewärmten Masse am Förderaggregat zur Folge haben würde.

Aufgabe der Erfindung ist es daher, ein Verfahren und einen Glasschmelzofen zur Durchführung dieses Verfahrens zu schaffen, bei denen aufgrund von Gemengevorwärmung der Wirkungsgrad wesentlich verbessert wird, bei welchen die genannten Nachteile, nämlich unwirtschaftlich hoher Aufwand oder Störung der Förderung des einzulegenden Gemenges vermieden werden und bei welchen sichergestellt wird, daß die Wirkungsgradverbesserung dauerhaft, mit geringem Aufwand und unter Gewährleistung einer hohen Glasqualität erreichbar ist.

Das erfindungsgemäße Verfahren und der erfindungsgemäße Glasschmelzofen sollen weiterhin den Betrieb ohne Erhöhung des personellen Aufwandes oder Einsatzes ermöglichen, auch in technisch noch nicht voll industrialisierten Ländern einsetzbar sein und einen Ofenbetrieb sowohl mit Öl als auch mit Gas ermöglichen.

Diese Aufgabe wird erfindungsgemäß dadurch gelöst, daß ein Teil des Abgasstromes zur End-Vorerwärmung der zugeführten Verbrennungsluft und der andere Teil zur Gemengevorwärmung dient und die Abgasströme dann wieder zusammengeführt werden und die anfängliche Vorwärmung der Verbrennungsluft gemeinsam vornehmen.

Vorteilhaft wird dabei das Gemenge über ein Fördermittel im Gegenstrom zu dem aus dem Ofen kommenden Abgasteilstrom zur Gemengevorwärmung geführt, wobei das Gemenge zur schnellen Erhitzung eine Schichtdicke von weniger als 5 cm aufweist.

Im einzelnen wird also das Abgas in der Schmelzwanne geteilt, wobei ein Teilstrom durch einen Stahl- oder Steinrekuperator zur Luftvorwärmung herangezogen wird, der zweite Teilstrom über eine gemengebedeckte Bandstrecke geleitet wird und im Gegenstrom das Gemenge-Scherbengemisch aufheizt. Auf diese Weise ist gewährleistet, daß eine hohe Temperaturdifferenz zwischen Wärmeträger und Wärmegut erreicht wird. Es ist dabei sinnvoll, die Fläche des Gemengevorwärmbandes so zu wählen, daß die Abgastemperaturen beim Verlassen der Bandvorwärmstrecke zwischen 500 und 800° C liegen. Die Gasströme werden nach Verlassen des Strahlungsrekuperators und der Bandvorwärmstrecke zweckmäßigerweise wieder zusammengeführt, wobei eine an der Zusammenführung montierte Regelklappe, welche temperaturgesteuert die eine oder andere Öffnung mehr oder weniger verschließt, eine einstellbare Temperaturdifferenz zwischen dem Abgas aus dem Rekuperator und der Bandvorwärmstrecke, die im Optimalfall gleich Null ist, ausregelt.

Die Mischtemperatur wird je nach Größe der Bandstrecke und des Strahlungsrekuperators zwischen 450 und 650° liegen. Bei entsprechender Größe der Bandvorwärmung und Menge der Abgasmenge, welche zur Gemengevorwärmung benutzt wird, kann die bei dieser Temperatur im Abgas enthaltene Wärmemenge durchaus zur Vorerhitzung der Verbrennungsluft herangezogen werden. Es empfiehlt sich daher, den zusammengeführten Abgasstrom durch einen weiteren Wärmetauscher zu leiten, der in diesem Fall ein Röhrenrekuperator sein muß, weil bei niedrigen Temperaturen der konvektive Wärmeübergang wesentlich den Strahlungsübergang überwiegt.

In einer besonderen Ausgestaltung kann das erfindungsgemäße Verfahren derart ausgestaltet sein, daß der Abzug des Abgasstroms, der zur Luftend-Vorwärmung dient, näher am Brennerbereich erfolgt, die Gemengeaufgabe vom

5

Brennerbereich entfernt erfolgt und der zur Gemengevorwärmung dienende Abgasteilstrom im Gegenstrom zu dem
eingegebenen Gemenge geführt wird und dieses zum Teil
aufheizt und aufschmilzt und aus dem Öfengewölbe an der
Gemengeeingabe abgezogen wird, wobei gegebenenfalls eine
Aufheizung des Schmelzbades zwischen dem Brennerbereich
und der Gemengeeingabe mittels elektrischer, über in das
Glasbad ragende Elektroden zugeführter Energie erfolgen
kann. Es wird dadurch vermieden, daß entweder das eingegebene Gemenge trotz der Vorwärmung die Schmelze am
Eingabepunkt zum Erstarren gelangen läßt.

Vorrichtungsmäßig ist der erfindungsgemäße Glasschmelzofen derart ausgestaltet, daß an der die Schmelze enthaltende Ofenteil ein Gemengeaufheizteil anschließt, an
dem die Fördermittel vorhanden sind, die das Gemenge im
Gegenstrom zu dem der Gemengevorwärmung dienenden Abgasteilstrom zu der Schmelze fördern,
daß ein Wärmeaustauscher zur Endvorwärmung der Luft vorhanden ist und
ein Regelorgan zur geregelten Zusammenführung der Teilströme und ein weiterer Wärmetauscher zur Anfangsvorwärmung der Verbrennungsluft vorhanden ist.

Die im Abgas vorhandenen Staubpartikel bilden Rückstände,
die an den Rohrwandungen der Abgasführung kondensieren
und zur Verstopfung führen können. Um dies zu vermeiden, wird vorteilhaft ein Röhrenrekuperator verwendet,
bei welchem in jedem Gasrohr eine Kette aufgehängt ist.
Diese Ketten sind an einem Schwingboden befestigt,
welcher von einem externen Antrieb periodisch in Schwingung versetzt werden kann. Dabei schlagen die Ketten an die
Rohrwandungen und führen so zu einer selbsttätigen Abreinigung des Kondensats. Dadurch ist es möglich, die Abgastemperatur auf ca. 200 - 220° C bzw. bis kurz über
dem Taupunkt herunterzukühlen und damit eine wesentlich größere Wärmemenge aus dem Abgas wieder dem Prozeß zur Verfügung zu stellen.

Ein weiterer erheblicher Vorteil der neuen Anlage ist es, daß die Rauchgase mit einer Endtemperatur vorliegen, bei der sie ohne große Schwierigkeiten mit herkömmlichen Filtern ausgefiltert werden können. Insbesondere sind die Volumina der Abgasmenge aufgrund der niedrigen Temperaturen und des geringen spezifischen Wärmeverbrauchs der Anlage wesentlich geringer. Ein weiterer Vorteil ist der, daß die Luftvorwärmung mit $800^{\circ}$ wesentlich niedriger liegt als bei Regenerativwannen, obwohl ein besserer Wirkungsgrad erreicht wird. Das hat zur Folge, daß die Stickoxydbildungskonzentration im Abgas nur 1/4 bis 1/8 dessen beträgt, was bei Hochtemperatur-Regenerativwannen üblich ist. Dennoch wird bei dem neuen Verfahren eine gleich hohe spezifische Belastung der Wanne erreicht, da die Schmelzgeschwindigkeit des Gemenges in der Wanne erheblich erhöht ist, da bis zu 40 % der dem Gemenge- und Scherbengemisch theoretisch zuzuführenden Energiemenge bereits im Vorwärmer übergeben wird, so daß eine erheblich höhere Schmelzgeschwindigkeit in der Schmelzwanne erreicht wird.

Das Gemengevorwärmband kann aus einem durchgehend geschlossenen Metallband, vorzugsweise der gesamten Ofenbreite bestehen. Es kann beschickt werden über einen über die gesamte Breite reichenden Bunker, der einen Schichthöhenbegrenzungsschieber besitzt, mit welchem man die Schichthöhe als auch das Profil der Schicht bestimmen kann.

Um einen besseren Wärmeübergang vom Abgas auf das Gemenge zu erreichen, kann eine Quetschwalze oberhalb des Bandes hinter dem Aufgabebunker angebracht sein, welche mit ihrem gesamten Gewicht auf dem Gemenge aufliegt und welche synchron mit dem Gemengeband angetrieben wird. Durch die Gewichtsauflage wird das Gemenge verdichtet, so daß die Wärmeleitung innerhalb der Gemengeschicht verbessert werden kann. Die Isolierwirkung des Gemenges auf dem Band führt dazu, daß selbst bei einer Schichtdicke von 3 cm und einer Verweilzeit auf dem Gemengevorwärmband von 18 Minuten die Temperatur am Metallband 150° nicht übersteigt.

Die Abdichtung des Gasraumes gegen die Außenluft kann vorteilhaft dadurch erreicht werden, daß das Profil des Gemenges auf dem Metallband so gestaltet wird, daß an der Seite eine größere Gemengeauflage vorhanden ist. Seitlich kann dann das Band durch einen luftgekühlten Begrenzungsbalken begrenzt werden, der verhindert, daß das Gemenge in diesem Bereich über das Band abläuft, bzw. durch die Kühlung wird verhindert, daß das Gemenge dort zu hohe Temperaturen bekommt und anklebt. Dieser luftgekühlte Begrenzungsbalken kann unten innen mit einer auswechselbaren Stahlbürste über die gesamte Länge versehen sein, welche verhindert, daß Scherben in den Spalt zwischen luftgekühltem Begrenzungsbalken und Metallband geraten und so zu einem verstärkten Verschleiß führen.

Das gesamte Band kann weiterhin auf auf einer Schiene laufenden Rollen gelagert sein und kann in der Längsrichtung verschoben werden. Durch diese Verschiebung in Längsrichtung, die periodisch erfolgt, wird erreicht, daß das Gemenge, welches am Bandkopf abgeworfen wird, in die Wanne geschoben wird, wodurch eine Rückströmung im Glasbad erzwungen wird, die ein Einfrieren im Aufgabebereich verhindert.

Damit bei der Vorwärtsbewegung das Metallband nicht zu stark beansprucht wird, kann auf der Kopfachse ein Einschiebebalken befestigt sein, welcher den Gemengehaufen vor sich her schiebt. Bei der Rückwärtsbewegung des Bandes kann der Balken durch einen einfachen Rastermechanismus in die Höhe gehoben werden, um zu vermeiden, daß Gemenge wieder zurückgezogen wird.

In einer anderen Ausgestaltung der Erfindung kann das Band auch höher gelegt werden und der Balken unterhalb des Bandes montiert werden. In diesem Fall kann das gesamte Gemengeband stationär montiert sein und im Augenblic der Vor- und Rückwärtsbewegung dieses Balkens wird das Band kurz gestoppt, um zu vermeiden, daß Gemenge hinter den Einschiebbalken fällt.

Mit dem geschilderten Verfahren ist es möglich, ohne zu hohem technischem Aufwand den Wirkungsgrad eines bestehenden Rekuperativofens von etwa 37 auf 65 % zu erhöhen, wenn die Bandfläche etwa gleich der Schmelzfläche der Anlage ist. Es kann also von einer idealen Lösung der anstehenden Probleme gesprochen werden.

Im folgenden wird ein Ausführungsbeispiel der Erfindung anhand von Zeichnungen näher beschrieben. Es zeigen:

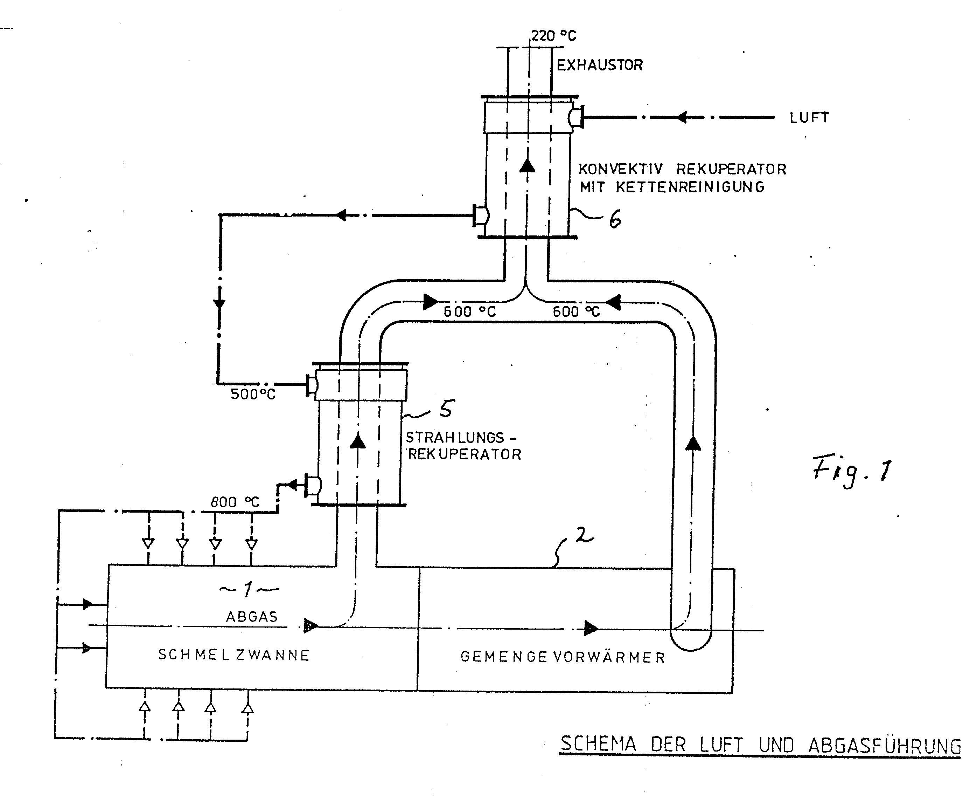

Figur 1 schematisch die Luft- und Verbrennungsgasführung gemäß der Erfindung,

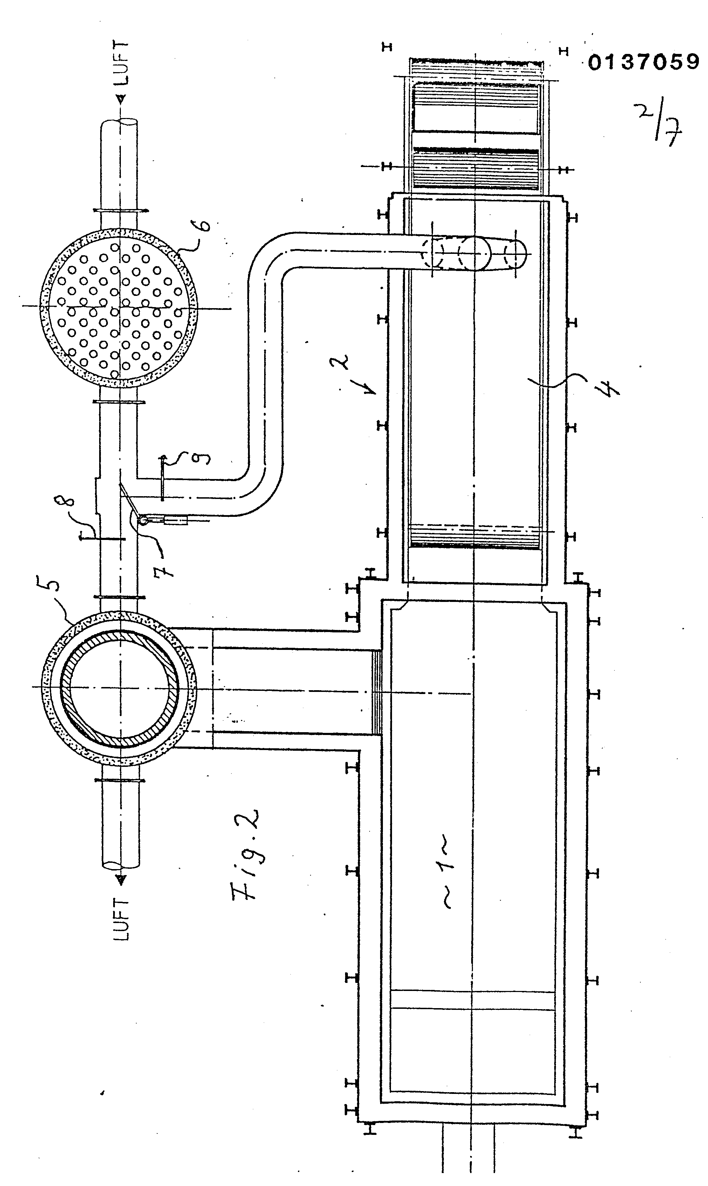

Figur 2 schematisch einen Schmelzofen mit dem Gemengevorwärmbereich,

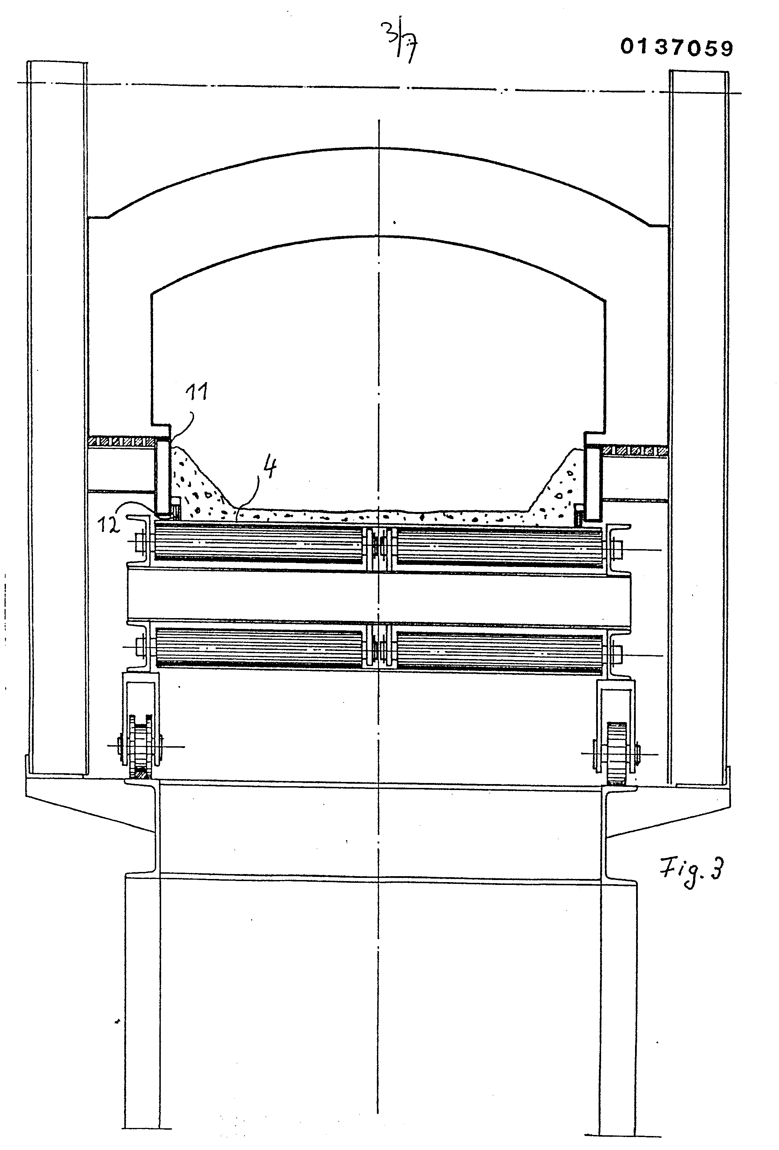

Figur 3 einen Querschnitt durch das Gemenge-Vorwärmband einschließlich des gasführenden Kanals,

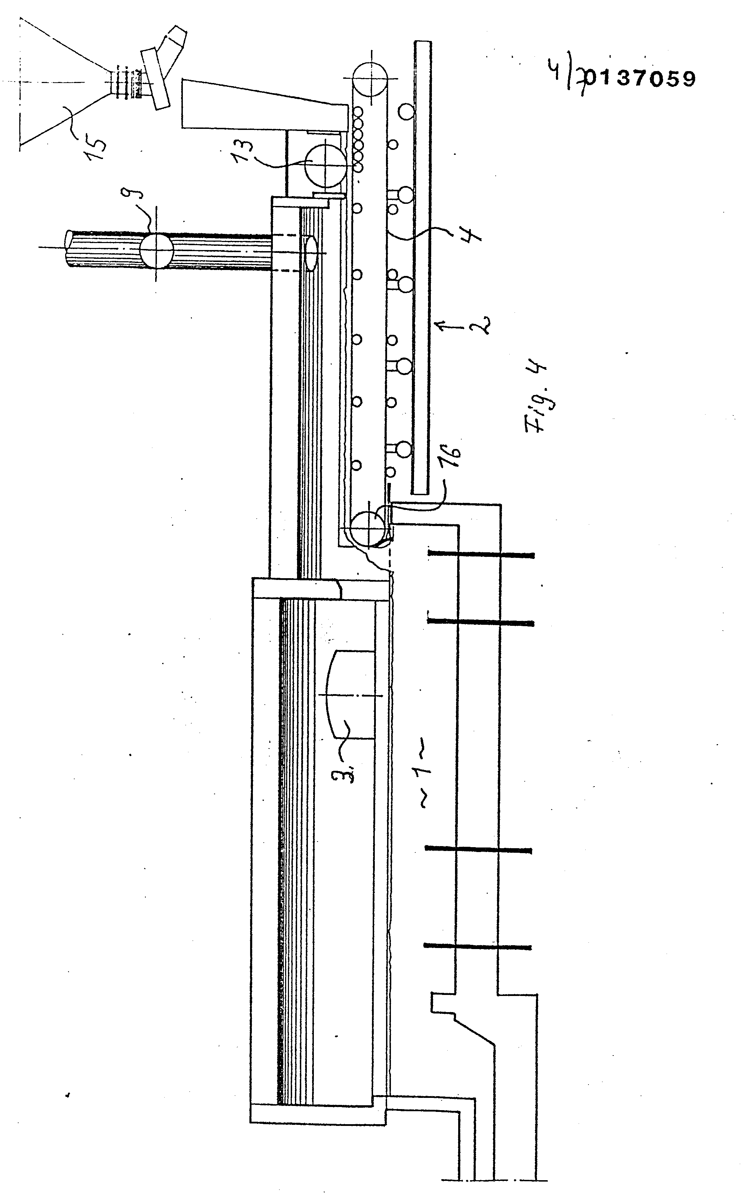

Figur 4 einen Längsschnitt durch den Ofen gemäß Fig. 2,

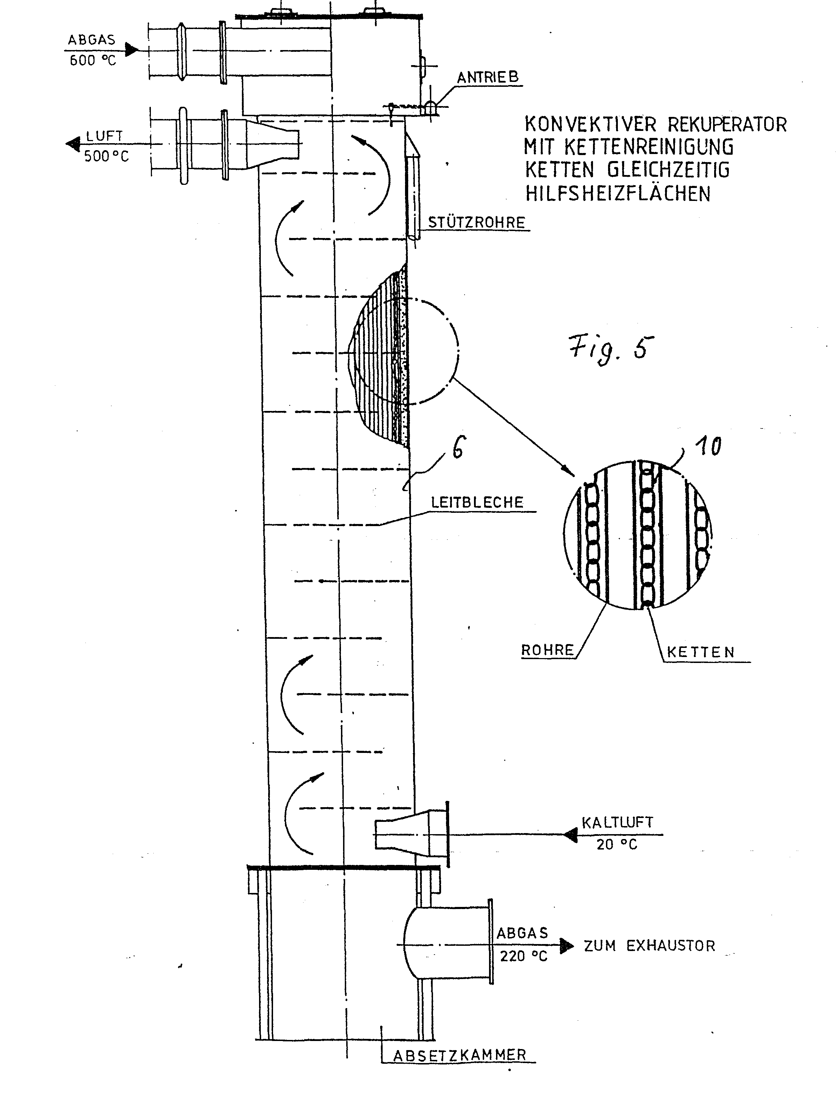

Figur 5 einen Wärmeaustauscher mit einer automatischen Reinigung,

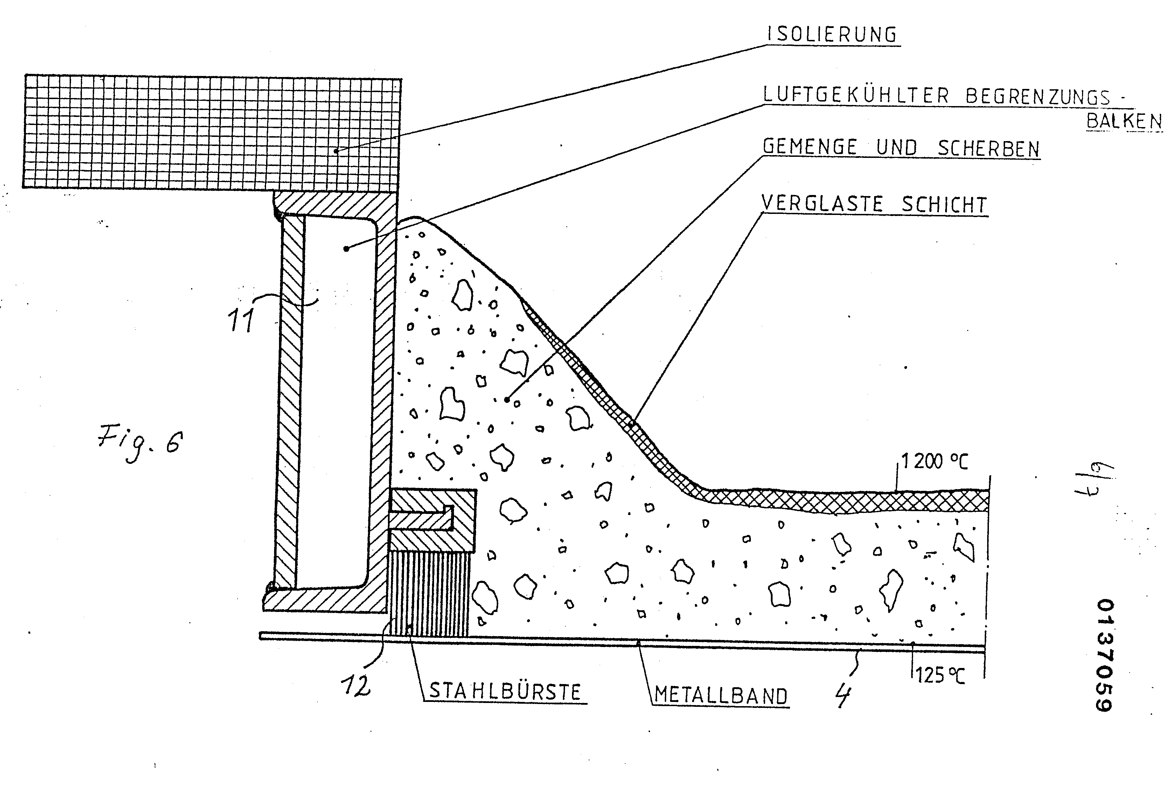

Figur 6 einen Teilquerschnitt des Bandes mit aufgelegtem Gemenge und

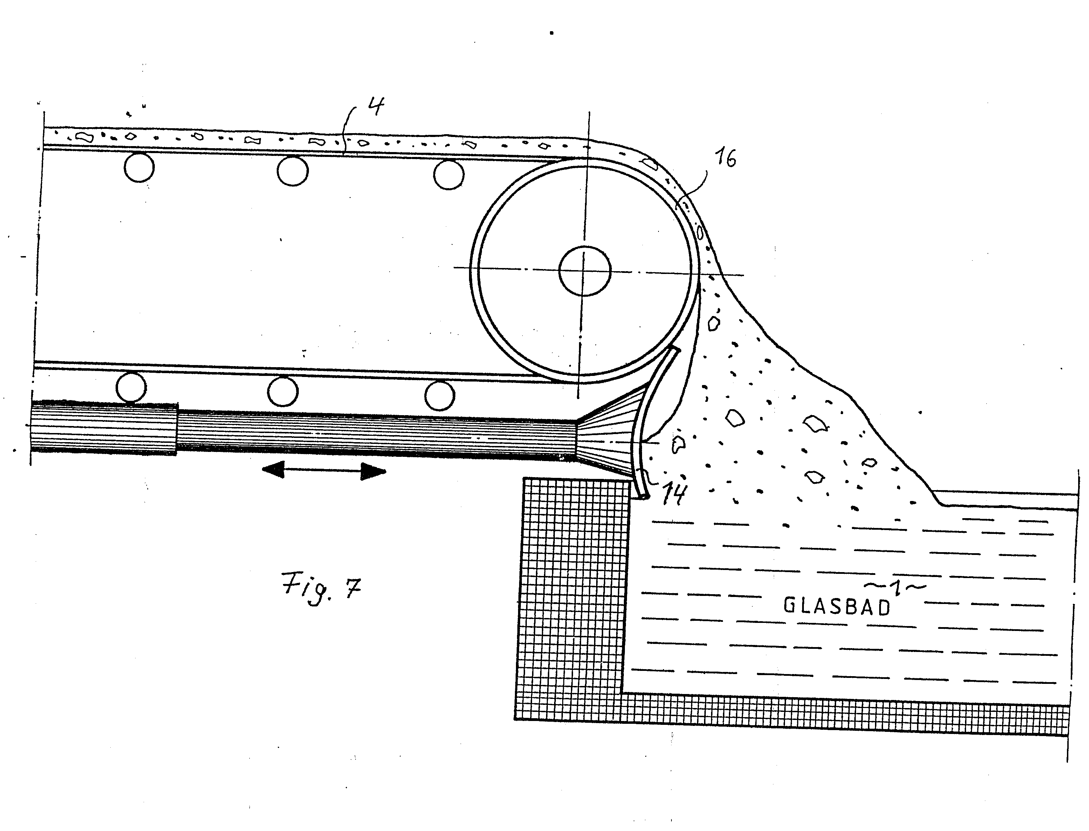

Figur 7 das Band in Teil-Längsschnitt im Aufgabebereich
des Gemenges auf die Schmelze.

Gemäß den Figuren besteht der erfindungsgemäße Glasschmelzofen aus einer dem üblichen entsprechenden, allerdings sehr kompakten Schmelzwanne mit einem Gewölbe,
einem Stahlgerüst und Brennern 3. Die eigentliche
Schmelze ist in diesem Zusammenhang mit der Bezugszahl
1 gekennzeichnet. Eine detaillierte Beschreibung der
eigentlichen Glasschmelzwanne kann entfallen, da
ihre Konstruktion für den Fachmann geläufig ist.

Erfindungsgemäß ist neben der Schmelzwanne und in direktem betrieblichem Anschluß damit ein Vorwärmteil für
das Gemenge angeordnet, in welchem das Gemenge von
einem Teilabgasstrom aufgeheizt wird.

Ein zweiter Teilabgasstrom wird aus der Schmelzwanne
direkt entnommen und durchströmt einen Wärmeaustauscher
5 zur Endvorwärmung der Verbrennungsluft.

Der Wärmeaustauscher 5 ist ein Rekuperativ-Wärmeaustauscher; alternativ kann an dieser Stelle aber auch
ein Regenerativ-Wärmeaustauscher verwendet werden.

Die beiden Teilgasströme I und II werden nach Durchströmen des Wärmeaustauschers 5 bzw. nach Durchströmen
des Gemengeaufheizteils 2 des Glasschmelzofens wieder
vereinigt, wobei sich eine Mischtemperatur einstellt.
Diese kann beispielsweise zwischen 500 und 800° C
liegen.

Der gesamte Abgasstrom durchströmt dann einen weiteren Wärmeaustauscher 6, in welchem die Frischluft für die Verbrennung auf eine mittlere Temperatur vorgewärmt wird, so daß sie dann, wie bereits beschrieben, in dem Wärmeaustauscher 5 auf die endgültige Temperatur erhitzt werden kann.

Der Wärmeaustauscher 6 ist ein Rekuperativ-Wärmeaustauscher mit Rohren, in denen eine Ablösevorrichtung 10 für abgelagerte Rückstände vorhanden ist.

Die Ablösevorrichtung 10 kann Ketten aufweisen, die an einem Rost befestigt sind und in regelmäßigen Zeitabständen in Schwingungen versetzt werden, so daß sie Rückstände innerhalb der gasführenden Rohre ablösen können.

Auf diese Weise ist es möglich, innerhalb des Wärmeaustauschers 6 eine Kühlung des Abgases auf Temperaturen bis kurz über den Kondensationspunkt vorzunehmen und so die Abgastemperatur unter optimaler Steigerung des Wirkungsgrades auf den für die Praxis geringstmöglichen Wert zu senken.

Eine weitere Abkühlung des Abgasstromes auf eine Temperatur unterhalb der Kondensationstemperatur erscheint zwar technisch möglich, durch den Einsatz von speziell korrosionsfest ausgekleideten Wärmeaustauschern ist der entsprechende Aufwand allerdings sehr hoch. Vorteilhaft ist dabei aber, daß das sonst mit dem Abgas austretende Kondensat ohne weiteres, z. B. durch Kalkzugabe unter Bildung von Gips chemisch gebunden werden kann.

Es ist erfindungsgemäß wesentlich, daß in den beiden getrennten Zweigen zur Führung des Teilstroms I und des Teilstroms II Regelorgane 8 und 9 vorhanden sind, welche in Form eines Schiebers oder dergleichen die jeweils in den Teilströmen fließende Gasmenge begrenzen können. Dadurch ist es möglich, eine optimale Temperatur für den Wärmeübergang einmal auf das Gemenge und zum anderen im Wärmeaustauscher 5 zur Endvorwärmung einzustellen bzw. eine optimale Temperatur nach dem Mischen der beiden Teilströme einzustellen.

Alternativ kann anstelle der getrennten Regelorgane 8 und 9 auch eine gemeinsame Stellklappe 7 verwendet werden, die automatisch bei einer Teilschließung des Durchganges für den einen Teilstrom eine entsprechende Öffnung des Durchganges des anderen Teilstromes vornimmt.

Der Gemengeaufheizteil 2 weist ein Metallband 4 als Fördermittel für das aufzuheizende bzw. aufgeheizte Gemenge auf, wobei dem Gemenge in üblicher Weise ein erheblicher Scherbenanteil beigegeben werden kann. Das Fördermittel 4 für das Gemenge weist vorteilhaft die gleiche Breite wie die Schmelzwanne auf, so daß die Gemengeeingabe über die gesamte Breite hinweg erfolgt.

Die Aufgabe des Gemenges auf das Metallband bzw. Fördermittel (ggf. Vibrationsrinne) 4 erfolgt über einen Gemengebunker 15 mit einer Aufgabeöffnung, die der Breite des Bandes 4 praktisch entspricht. Mittels einer Quetschwalze 13, die direkt hinter der Gemengeaufgabe auf dem Band angeordnet ist, kann eine Verdichtung des Gemenges zur Verbesserung der Wärmeübertragung vorgenommen werden. Ein nicht gezeigter Schichthöhenbegrenzungsschieber kann in diesem Zusammenhang die Schichthöhe, die vorteilhaft unter 5 cm beträgt, sowie ein Schichtprofil einstellen.

Die Einstellung des Schichtprofils ist zweckmäßig, um an den Bandseiten, an denen eine Begrenzung der Gemengeschicht erforderlich ist, eine größere Dicke des Gemenges einzustellen. Dadurch wird in diesen Bereichen die Temperatur zusätzlich zu der Kühlung durch die Begrenzung herabgesetzt und es wird vermieden, daß im Begrenzungsbereich eine verglaste und damit höchst klebrige Schicht auftritt. Darüber hinaus hat eine profilierte Schicht eine größere Oberfläche und damit einen besseren Wärmeübergang.

Die seitliche Begrenzung der Gemengeschicht erfolgt über luftgekühlte Begrenzungsbalken 11, die an ihrem unteren Bereich Stahlbürsten 12 tragen, deren Borsten auf der Bandoberfläche aufliegen. Ein seitliches Austreten des Gemenges wird dadurch sicher verhindert.

Die genannten Maßnahmen ermöglichen es, daß mit Ausnahme der Randbereiche eine nur geringe Schichtdicke des Gemenges vorliegen kann, in welcher eine ausreichend gute Wärmeleitung zur Aufheizung auf eine hohe Mitteltemperatur möglich ist, wobei eine verglaste Oberflächenschicht zugelassen werden kann. An den Rändern wird diese verglaste Schicht verringert und durch die beschriebene Erhöhung der Schichtdicke in diesen Bereichen in Verbindung mit der Kühlung durch die Begrenzungsbalken wird das Gemenge im Kontakt mit den Balken 11 rieselfähig gehalten, kann also nicht anbacken und den Betrieb der Anlage stören.

Das Band 4 selbst läuft innerhalb eines nach oben hin geschlossenen, gemauerten, isolierten Kanals, der direkt in der Schmelzwanne mündet. Nach unten hin ist die Bandkonstruktion offen, um zu gewährleisten, daß sämtliche beweglichen Teile eine niedrige Temperatur haben. Eine thermische Trennung erfolgt also innerhalb des Kanals seitlich neben den Begrenzungsbalken.

Eine Abdichtung im hinteren Bereich wird dabei dadurch erreicht, daß der Raum, in welchem die Quetschwalze 13 läuft, gegen den Gemengebunker 15 abgeschlossen wird, so daß die Walze eine natürliche Dichtung mit sich bringt und der Bunkerbereich mit dem Schichthöhenbegrenzungsschieber ebenfalls eine niedrige Temperatur aufweist. Die thermische Trennung zwischen der gasführenden Kanaloberseite und em Bunkerbereich erfolgt also durch die Quetschwalze 13 und deren Lagerung.

Das Metallband 4 kann entweder in fester Position oder in seiner Längsrichtung verschieblich ausgebildet sein. Das Unterstützungsgerüst für das Metallband 4 weist dabei Rollen auf, die auf Schienen laufen. Die Bewegung geschieht über einen nicht gezeigten Antriebsmechanismuns und über diese Bandbewegung wird eine gleichmäßige Ablage auf der Oberfläche der Schmelze 1 eingestellt. Unterhalb der Umlenkrolle 16 ist ein Einschiebebalken 14 angeordnet, welcher bei der Vorwärtsbewegung des Bandes 4 das aufgegebene Gemenge in die Wanne schiebt. Um nicht eine Gemengeanhäufung am Wannenrand bei der Rückwärtsbewegung des Bandes in Kauf zu nehmen, kann der Einschiebebalken 14 über eine einfache Rastervorrichtung bei der Rückwärtsbewegung hochgenommen werden.

Alternativ kann das Band 4 aber auch feststehend angeordnet sein und der Einschiebebalken 14 wird dann in der beschriebenen Weise unabhängig von dem Band 4 bewegt.

In einer weiteren Ausgestaltung der Erfindung (nicht gezeigt) kann der Gemengeaufheizteil mit der eigentlichen Schmelzwanne über einen zusätzlichen Wannenteil verbunden sein, in welchem der Abgasteilstrom 2 für die Gemengeaufheizung bereits das auf der Schmelze 1 schwimmende Gemenge aufheizt und erst dann über das Metallband 4 mit dem darauf aufgegebenen Gemenge eführt wird. Die Länge des Metallbandes 4 kann dadurch verringert werden und die dort auftretenden Temperaturen können ebenfalls herabgesetzt werden.

Um bei dieser Ausgestaltung der Schmelzwanne ein Einfrieren der Schmelze unterhalb des Aufgabepunktes des Gemenges sicher zu verhindern, können dort Elektroden eingesetzt werden, welche elektrische Energie zuführen.

Patentansprüche:

1. Verfahren zum Schmelzen von Glas mit einer Vorwärmung des auf das Glasbad aufzugebenden Gemenges, sowie einer Energiezuführung in den Ofen mittels Gas- oder Ölbrennern, denen durch das Abgas vorgewärmte Verbrennungsluft zugeführt wird, dadurch gekennzeichnet, daß ein Teil des Abgasstromes zur End-Vorerwärmung der zugeführten Verbrennungsluft und der andere Teil zur Gemengevorwärmung dient und die Abgasströme dann wieder zusammengeführt werden und die anfängliche Vorwärmung der Verbrennungsluft gemeinsam vornehmen.

2. Verfahren nach Anspruch 1, dadurch gekennzeichnet, daß das Gemenge übe ein Fördermittel im Gegenstrom zu dem aus dem Ofen kommenden Abgasteilstrom zur Gemengevorerwärmung geführt wird.

3. Verfahren nach Anspruch 2, gekennzeichnet durch eine Schichtdicke des Gemenges von weniger als 5 cm.

4. Verfahren nach einem der Ansprüche 1 bis 3, dadurch gekennzeichnet, daß vor dem anfänglichen Vorwärmen jeweils eine Mengenregelung der zusammenfließenden Teilabgasströme erfolgt.

5. Verfahren nach einem der Ansprüche 1 bis 4, dadurch gekennzeichnet, daß der Abzug des Abgasstromes, der zur Luftend-Vorwärmung dient, näher am Brennerbereich erfolgt, als die Gemengeaufgabe, welche vom Brennerbereich entfernt erfolgt und zur Gemengevorwärmung dienende Abgasteilstrom im Gegenstrom zu dem eingegebenen Gemenge geführt wird, dieses zum Teil aufheizt und aufschmilzt und aus dem Öfengewölbe an der Gemengeeingabe abgezogen wird.

_16_

6. Verfahren nach Anspruch 1, gekennzeichnet durch eine Aufheizung des Schmelzbades zwischen dem Brennerbereich und der Gemengeeingabe mittels elektrischer, über in das Glasbad ragende Elektroden zugeführter Energie.

7. Glasschmelzofen zur Durchführung des Verfahrens nach einem der vorhergehenen Ansprüche, mit einer Einrichtung zur Gemengevorwärmung und einer zur Vorwärmung der Verbrennungsluft, dadurch gekennzeichnet, daß an dem die Schmelze enthaltende Ofenteil (1) ein Gemengeaufheizteil (2) anschließt, an dem die Fördermittel (4) vorhanden sind, die das Gemenge im Gegenstrom zu dem der Gemengevorwärmung dienenden Abgasteilstrom zu der Schmelze fördern, daß ein Wärmeaustauscher (5) zur Endvorwärmung der Luft vorhanden ist und ein Regelorgan (7) zur geregelten Zusammenführung der Teilströme und ein weiterer Wärmetauscher (6) zur Anfangsvorwärmung der Verbrennungsluft vorhanden ist.

8. Glasschmelzofen nach Anspruch 7, dadurch gekennzeichnet, daß von den Wärmeaustauschern (5, 6) mindestens der für die Anfangsvorwärmung der Luft ein Rekuperativaustauscher mit einer Ablösevorrichtung (10) für abgelagerte Rückstände ist.

9. Glasschmelzofen nach Anspruch 7 oder 8, dadurch gekennzeichnet, daß er in den Leitungen der Teilgasströme Schieber, Drosseln oder dergleichen (8, 9) zur Einstellung der Größe jeder der beiden Teilgasströme aufweist.

10. Glasschmelzofen nach Anspruch 8, gekennzeichnet durch periodisch in Schwingungen gesetzte Ketten (10) in den von dem Abgasstrom durchströmten Rohren des Rekuperativwärmeaustauschers (6).

11. Glaschmelzofen nach Anspruch 7, dadurch gekennzeichnet, daß das Fördermittel (4) für das aufzuwärmende Gemenge ein Metallband ist, an dessen Randbereich Begrenzungen vorhanden sind.

12. Glasschmelzofen nach Anspruch 11, dadurch gekennzeichnet, daß die Begrenzung ein ortsfester, innen gekühlter Balken (11) ist, der am unteren Ende mittels elastischer Elemente (12) dichtend an der Oberfläche des Metallbandes anliegt.

13. Glasschmelzofen nach Anspruch 12, dadurch gekennzeichnet, daß die elastischen Elemente (12) Stahl- oder Kunststoffbürsten sind.

14. Glasschmelzofen nach einem der Ansprüche 11 bis 13, dadurch gekennzeichnet, daß hinter der Gemengeaufgabe auf dem Metallband (4) eine Quetschwalze (13) angeordnet ist.

15. Glasschmelzofen nach einem der Ansprüche 7 bis 14, dadurch gekennzeichnet, daß das Fördermittel (4) über der Schmelze in Längsrichtung hin und her bewegbar ist.

16. Glasschmelzofen nach einem der Ansprüche 7 bis 15, dadurch gekennzeichnet, daß im Abwurfbereich des Gemenges zu dessen Verteilung ein vor und zurück bewegbarer Einschiebebalken (14) vorhanden ist.

17. Glasschmelzofen nach Anspruch 16, dadurch gekennzeichnet, daß der Einschiebebalken in Verbindung mit dem Band oder davon unabhängig bewegbar ist und bei der Rückbewegung durch einen Rastermechanismus anhebbar ist.

18. Glasschmelzofen nach einem der Ansprüche 7 - 16, dadurch gekennzeichnet, daß ein Bunker (15) zur Gemengeaufgabe auf das Band (4) vorhanden ist, dessen Öffnung der effektiven Bandbreite entspricht und der einen Schichthöhenbegrenzungsschieber zur Einstellung der Schichthöhe und des Schichtprofils aufweist.

SCHEMA DER LUFT UND ABGASFÜHRUNG

Fig. 1

0137059

1/7

LUFT

5

8

7

9

6

Fig.2

2

~1~

4

0137059

2/7

Fig. 3

Fig. 4

0137059

ABGAS
600 °C

LUFT
500 °C

ANTRIEB

KONVEKTIVER REKUPERATOR
MIT KETTENREINIGUNG
KETTEN GLEICHZEITIG
HILFSHEIZFLÄCHEN

STÜTZROHRE

Fig. 5

6

LEITBLECHE

10

ROHRE

KETTEN

KALTLUFT
20 °C

ABGAS
220 °C

ZUM EXHAUSTOR

ABSETZKAMMER

Fig. 6

ISOLIERUNG

LUFTGEKÜHLTER BEGRENZUNGS-BALKEN

GEMENGE UND SCHERBEN

VERGLASTE SCHICHT

11

12

1200 °C

125 °C

STAHLBÜRSTE    METALLBAND    4

Fig. 7

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | DE-B-1 069 346 (INSTITUT FèR WàRMETECHNIK UND AUTOMATISIERUNG DER SILIKATHèTTENINDUSTRIE W.T.I., JENA-BURGAU) * Insgesamt * | 1,2,4, 5,7,9 | C 03 B 3/00 C 03 B 5/235 |
| | --- | | |
| Y | GB-A- 784 339 (AKTIEBOLAGET SURTE GLASBRUK) * Insgesamt * | 1,2,5, 7 | |
| | ----- | | |

RECHERCHIERTE
SACHGEBIETE (Int. Cl. 3)

C 03 B

Der vorliegende Recherchenbericht wurde für alle Patentansprüche erstellt.

| Recherchenort | Abschlußdatum der Recherche | Prüfer |
|---|---|---|
| DEN HAAG | 28-05-1984 | VAN DEN BOSSCHE W.L. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82